# EUROPEAN PATENT SPECIFICATION

(11) **EP 2 271 453 B1**
(45) Date of publication and mention of the grant of the patent: **30.05.2012**
(21) Application number: 08718847.0
(22) Date of filing: 19.03.2008
(51) Int. Cl.: B23D 21/00

(54) **PIPE CUTTING AND CHAMFERING TOO**
ROHRTRENN- UND -ANFASWERKZEUG
OUTIL DE DÉCOUPE DE TUYAU ET DE CHANFREINAGE

(43) Date of publication of application: 12.01.2011
(73) Proprietor: Wilson, Mervyn, Norwich Norfolk NR2 2HX (GB)
(72) Inventor: Wilson, Mervyn, Norwich Norfolk NR2 2HX (GB)
(74) Representative: ip21 Ltd
(86) International application number: PCT/GB2008/001010
(87) International publication number: WO 2008/114032

(56) References cited:
- US-A- 4 791 842
- US-A- 5 836 079

## Description

The invention relates to pipe cutting and chamfering tools.

### Background to the Invention

Waste pipes for example the well known brown pipes made of plastics material are conventionally first severed in two portions using a hand saw and then once the respective ends of the portions are exposed, they are sequentially chamfered. The usual method employed is a hand file although automatic chamfering tools exist which are placed on an individual pipe portion end and then rotated until a chamfer is achieved around the circumference of the pipe on a single end portion.

Chamfering tools require the pipes to be accessed in their longitudinal direction. Thus, chamfering in confined spaces, for example when fitting a junction to a buried pipe, wound normally require dismantling and/or displacement of the buried pipe, which are both difficult and time wasting.

One of the problems the invention addresses is how to cut and chamfer pipes even when these are difficult to access. Another object of the invention is to reduce the number of actions required to cut and chamfer a pipe.

The following prior art documents are acknowledged: DE 2305633; US 6129488; and US 4084463. DE 2305633 fails to show a tool which would be portable since it is destined to be mounted on a workbench, It also requires the insertion of the pipe through the open ends of a ring. The prior art tool would therefore not be suitable for operation in spaces which would be difficult to access or off-site.

The following prior art documents are acknowledged US4791842 on which the preambles of claims 1 and 8 are based and US5836079. US4791842 discloses a pipe machining apparatus having a tool carrier rotatable about a frame mounted externally of a pipe, with the frame being formed of two semiannular sections which are releasably held together by connection devices including coacting pin and latch structures which are effectively positioned by means operable from the side of the frame. The tool carrier mounts at least one tool head having a tool slide for a tool movable radially of the pipe. The tool slide is movable by rotation of a feed screw which is rotated in a tool slide advancing direction by a rack and pinion structure including a rack adjustably mounted on a feed plunger which coacts with a tool advance cam on the frame. The rack is also mounted for pivotal movement to permit manual rotation of the feed screw in a tool slide retracting direction, which pivoting results from cogging of the pinion gears relative to the rack gears. The rack is adjustably threaded on the feed plunger to vary the stroke of the rack and adjust the feed rate relative to rotation of the tool carrier without change of the tool-advance cam to one of different contour.

US5836079 discloses a self-contained power driven, adjustable tube cutting tool. Within the main tool housing is a rotatably mounted C-shaped body having an adjustable automatic cutter feeding and retract mechanism therein, operable by the rotational movement of the body about the pipe axis. Opposing a set of pipe backup rollers is a cutting wheel attached to post slidable through the center bores of two mating cylindrical bodies all on a common longitudinal axis. The mating faces are spirally configured through a single rotational turn to create linear expansion and contraction of the bodies as one, integrally attached to a ratchet wheel, rotates while the other does not. A spring biased pawl couples the non-rotational body to the sliding post. The ratchet wheel engages a second spring biased driving pawl pivotally attached to a cylindrical sliding roller body which protrudes from the periphery of the cutting wheel body. A stationary semicircular cam track is fixed within the main tool housing adjacent to the cutting wheel body periphery. As the body is rotationally driven the roller follows the profile of the cam track and hence the driving pawl moves in a radial direction inward to the pipe axis engaging and rotating the ratchet wheel, thus the two cylindrical bodies are then expanded and move the post and cutter in radially towards the pipe axis as it cuts.

### Summary of the Invention

In a first broad independent aspect, the invention provides a pipe cutting and chamfering tool comprising one or more cutting portions for severing the pipe into two portions; one or more chamfering portions for chamfering the edges of said pipe portions; wherein the cutting and chamfering portions is or are configured to be driven; wherein said tool incorporates a jaw for securing the tool onto a pipe from its side and for guiding the relative displacement of said pipe and said cutting and chamfering portions; wherein said jaw incorporates a first portion which is substantially C-shaped and a second portion; characterised in that said first portion is pivotally mounted to said second portion; said first portion incorporating a roller at its distal extremity which projects at a right angle from the surface of said first portion; said second portion incorporating two rollers which project at a right angle from the surface of said second portion; said rollers being provided respectively at distal and proximal positions of said second portion; said first portion being pivotable relative to said second portion between a first position and a second position; whereby in said first position the jaw is sufficiently open to allow the tool to be located about a pipe from its side and in a second position where the jaw portions are brought closer together whilst their distal extremities remain apart so that in said second position said rovers engage said pipe to secure the tool to said pipe; in said second position said rovers forming a clamping effect on said pipe circumference and acting as a guide when the pipe is rotated relative to the jaw.

In a subsidiary aspect, the pipe is displaced by the operator whilst the cutting and chamfering portions remain in their position. Alternatively, the cutting and chamfering portions are displaced whilst the pipe is held in its position.

A jaw is particularly advantageous because it allows the tool to be fitted onto a pipe from its side. It also improves the security of attachment of the tool to the pipe.

A jaw which incorporates a number of rollers which engage the pipe when said jaw is secured onto said pipe and which act as said guiding means is particularly advantageous because it allows the operation to be carried out with greater accuracy than would otherwise be achieved.

The pipe cutting and chamfering tool may be shaped and configured to be held and carried by hand comprising one or more cutting portions for severing the pipe into two portions; one or more chamfering portions for chamfering the edges of said pipe portions; wherein the cutting and chamfering portions is or are configured to be driven; and the tool incorporates a handle for carrying the tool whilst using the tool.

This configuration is particularly advantageous because it allows pipes to be cut and chamfered in one operation and outside of a workshop or without requiring a work bench. It also allows cutting and chamfering to take place in confined spaces without requiring dismantling or any displacement of the soil pipe. It also minimises the time required for installing a waste pipe system. In addition, it allows the chamfering to be carried out with greater accuracy than any manual system.

A tool which comprises a clamp for securing the tool onto the pipe and one or more cutting and chamfering portions is or are driven to displace about the circumference of the pipe allows the cutting and chamfering operations to be of greater accuracy than would otherwise be the case.

A tool which comprises a clamp for securing the tool onto the pipe which incorporates a guide for locating the one or more cutting and chamfering portion relative to the pipe as it is or they are manually displaced about the circumference of the pipe whilst being driven for cutting and chamfering is particularly advantageous because it allows the operation to be partly manually operated whilst preserving the velocity of the cutting and chamfering operations.

In a further subsidiary aspect, one or more cutting portions is or are integrally formed with one or more chamfering portions. This configuration is particularly advantageous because it allows the blades to cut the pipe and to chamfer the pipe by using a shaving operation. It also may allow the blades to be replaceable blades.

In a further subsidiary aspect, the tool further comprises a spigot protruding from the tool for engagement with a rotary power tool. This configuration allows the tool to be driven by a rotary power stool without necessarily incorporating the power driving components within the tool.

In a further subsidiary aspect, the one or more cutting and chamfering portions interacts or interact with one or more springs, which, in use, urges or urge the portions towards the pipe. This allow the system to accommodate variations in the diameter of a given soil pipe whilst still maintaining the necessary accuracy for the cutting and chamfering operations.

In a further broad independent aspect, the invention provides a jaw for use with a pipe cutting and chamfering tool according to the first aspect, incorporating means for receiving and securing a power tool; wherein said jaw is sized and shaped to be secured about a pipe.

In a subsidiary aspect, said jaw incorporates a number of rollers which engage the pipe when said jaw is secured onto said pipe and which act as said guiding means.

### Brief Description of the Figures

Figure 1 shows a top view of a cutting and chamfering tool in accordance with a first embodiment of the invention.
Figure 2 shows a perspective view of a second embodiment of the invention.
Figure 3 shows a perspective view of a third embodiment of the invention.
Figure 4 shows a perspective view of a fourth embodiment of the invention.
Figure 5 shows a side view of a fifth embodiment of the invention.
Figure 6 shows a side view of an interlock.
Figure 7 shows an inside surface view, of a portion, from an enclosing member of the invention.
Figure 8 shows a perspective view of a sixth embodiment of the invention.
Figure 9 shows a perspective view of the drive mechanism required for the sixth embodiment of the invention.
Figure 10 shows a side view of an interlock and damp.

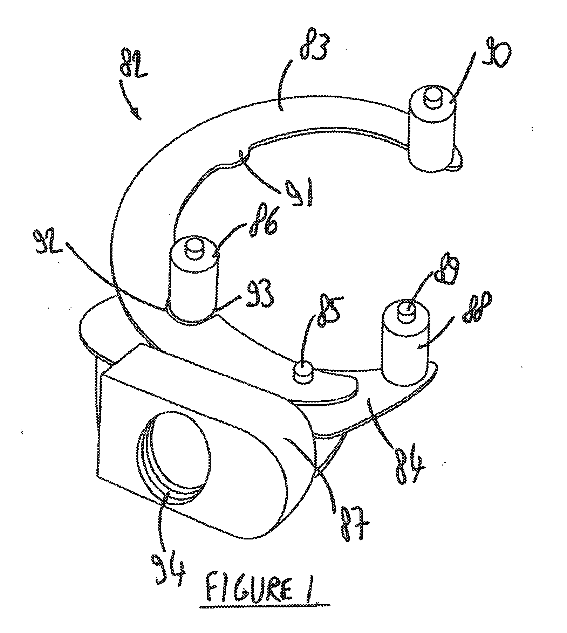

Figure 1 shows a perspective view of the jaw from the side where rollers are visible.

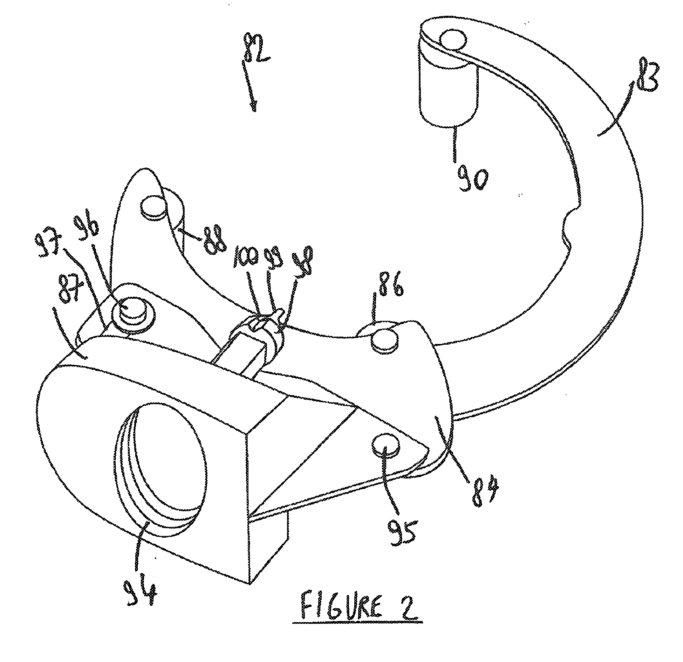

Figure 2 shows the jaw from the opposite side to that shown in figure 1.

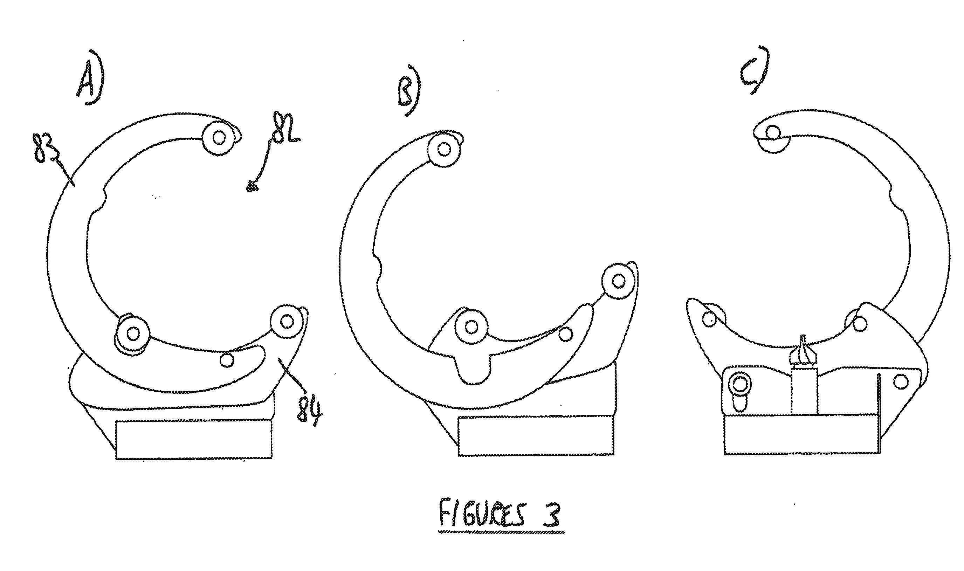

Figures 3 show side elevations. In particular, figure 3A shows a side elevation of the jaw from the roller side in its closed position. Figure 3B shows a side elevation of the jaw in its open configuration from the roller side. Figure 3C shows the jaw in its closed position with the cutting and chamfering tool in place.

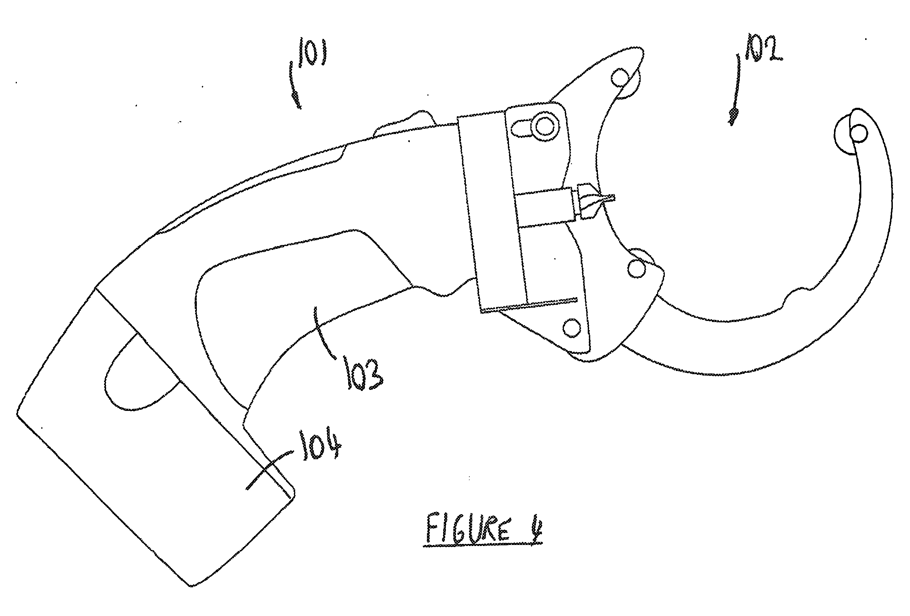

Figure 4 shows a side elevation of a hand held power tool incorporating the jaw of figures 1 to 3.

### Detailed Description of the Figures

Figure 1 shows a jaw generally referenced 82 with a first half 83 and a second half 84. Half 83 is substantially C-shaped and is pivotally secured to half 84 through pivot 85. The movement of half 83 is limited between roller 86 and housing 87. The jaw shown in figure 1 is in its closed position i.e. when half 83 abuts against roller 86. Roller 86 is attached to half 84. Similarly at the opposite extremity of half 84, roller 88 is attached to half 84. The rollers are freely rotatable about a central shaft such as shaft 89. The rollers may be of the kind employed in copper pipe chamfering tools which would marginally dig into the outer surface of the pipe which is to be chamfered. At the opposite extremity of half 83 a further roller 90 is provided. The three rollers 86, 88 and 90 form a clamping effect on the pipe circumference and act as a guide when the pipe is rotated relative to jaw 82. The rollers project at a right angle from the surface of halves 83 and 84 respectively. As part of the internal diameter of half 83 there is provided a radially projecting ear 91. Half 83 also incorporates an edge cut-out 92 which corresponds to the base portion 93 of roller 86.

Housing 87 is secured to half 84 and incorporates at its proximal extremity an opening 94 for receiving the head of a rotary power tool. The housing 87 may take the form of a split housing allowing the housing to be clamped to the head of the rotary tool. Any appropriate clamping means may be employed to secure the rotary power tool to the housing. The invention also envisages that the jaw 82 may be an integral part of a rotary power tool.

Figure 2 shows jaw 82 from the opposite side in which identical components have retained identical references. Housing 87 is secured to half 84 via a pivot point 95. A second attachment means is provided in the form of a further fastener 96 which runs in a slot 97 which allows the housing to be slightly adjusted in order to allow the cutting and chamfering bit 98 to be displaced to and from a pipe as part of the cutting and chamfering operation. The chamfering and cutting bit incorporates a substantially cylindrical tip 99 which is primarily used to cut the pipe and a substantially conical portion 100 which is employed to cut in a chamfering form. Rollers 86, 88 and 90 may incorporate a pair of disc-shaped rollers at their upper and lower extremity which would engage and run against the circumference of a pipe. A spacer would be provided between the discs. This configuration allows the tool to be accurately guided at a right angle relative to the pipe.

Figure 3A shows the jaw 82 with halves 83 and 84 in their closed position. Figure 38 shows halves 83 and 84 in their open position which allows the insertion of a pipe. Figure 3C shows the jaw in its closed position with a drill bit ready for cutting and chamfering.

Figure 4 shows the cutting and chamfering tool 101 which incorporates a jaw 102 of the kind described in the preceding figures 11 to 13. The tool incorporates a handle 103 which is angled to assist with the cutting and chamfering operation. The tool incorporates a battery 104 at the rear portion of the tool. The battery may be rechargeable as per conventional power tools.

The jaw of the preceding figures may be formed in a plurality of sizes or may be extendable to and from a plurality of sizes such as in particular 82 mm, 110 mm, and 160 mm.

## Claims

1. A jaw for use with a pipe cutting and chamfering tool, incorporating means for receiving and securing a power tool; wherein said jaw is sized and shaped to be secured about a pipe; said jaw incorporating a first portion (83) which is substantially C-shaped and a second portion (84); **characterised in that** said first portion (83) is pivotally mounted to said second portion (84); said first portion incorporating a roller (90) at its distal extremity which projects at a right angle from the surface of said first portion; said second portion incorporating two rollers (86, 88) which project at a right angle from the surface of said second portion; said rollers being provided respectively at distal and proximal positions of said second portion; said first portion being pivotable relative to said second portion between a first position and a second position; whereby in said first position the jaw is sufficiently open to allow the tool to be located about a pipe from its side and in a second position where the jaw portions are brought closer together whilst their distal extremities remain apart so that in said second position said rollers (86, 88, 90) engage said pipe to secure the tool to said pipe; in said second position said rollers forming a clamping effect on said pipe circumference and acting as a guide when the pipe is rotated relative to the jaw.

2. A jaw according to claim 1, wherein said rollers (86, 88, 90) each incorporate a pair of discs configured to engage and run against the circumference of a pipe.

3. A pipe cutting and chamfering tool (82) comprising one or more cutting portions (99) for severing the pipe into two portions; one or more chamfering persons (100) for chamfering the edges of said pipe portions; wherein the cutting and chamfering portions (99, 100) is or are configured to be driven; **characterised in that** said tool incorporates a jaw according to claim 1.

4. A tool according to claim 3, further comprising a housing (87) for receiving a rotary power tool; said housing being pivotally mounted onto said second portion (84); whereby the cutting and chamfering portions may be displaced to and from said pipe.

5. A tool according to either of the preceding claims, wherein said rollers (86, 88, 90) each incorporate a pair of discs configured to engage and run against the circumference of a pipe.

6. A tool according to any of the preceding claims, wherein one or more cutting portions is or are integrally formed with one or more chamfering portions.

7. A tool according to claim 6, wherein the cutting and chamfering portions incorporate one or more blades with a first edge portion angled for cutting and a second edge portion angled for chamfering.

8. A tool according to any of the preceding claims, further comprising a spigot protruding from said tool for engagement with a rotary power tool.

9. A tool according to any of the preceding claims, wherein said pipe cutting and chamfering tool is shaped and configured to be held and carried by hand; the tool incorporating a handle for carrying the tool whilst using the tool.

## Patentansprüche

1. Klaue zur Verwendung mit einem Werkzeug zum Rohrschneiden und Rohranfasen, enthaltend Mittel zum Aufnehmen und Befestigen eines fremdkraftbetriebenen Werkzeugs; wobei die Klaue in Größe und Form so ausgelegt ist, dass sie um ein Rohr befestigt werden kann; die Klaue enthaltend einen ersten Abschnitt (83), der im Wesentlichen C-förmig ist, und einen zweiten Abschnitt (84); **dadurch gekennzeichnet, dass** der erste Abschnitt (83) schwenkbar an dem zweiten Abschnitt (84) montiert ist; wobei der erste Abschnitt an seinem äußerten distalen Ende eine Rolle (90) enthält, die in einem rechten Winkel von der Oberfläche des ersten Abschnitts absteht; wobei der zweite Abschnitt zwei Rollen (86, 88) enthält, die in einem rechten Winkel von der Oberfläche des zweiten Abschnitts abstehen; wobei die Rollen jeweils an den distalen und proximalen Positionen des zweiten Abschnitts vorgesehen sind; wobei der erste Abschnitt im Verhältnis zum zweiten Abschnitt schwenkbar ist zwischen einer ersten Position und einer zweiten Position; wodurch die Klaue in der ersten Position ausreichend geöffnet ist, um die Positionierung des Werkzeugs auf einem Rohr von seiner Seite her zu ermöglichen, und in einer zweiten Position, in der die Klauenabschnitte stärker aneinander angenähert sind, während ihre distalen äußersten Enden getrennt bleiben, so dass in dieser zweiten Position die Rollen (86, 88, 90) in Eingriff mit dem Rohr kommen, um das Werkzeug an dem Rohr zu befestigen; wobei die Rollen in der zweiten Position eine Klemmwirkung aus den Rohrumfang ausüben und als eine Führung wirken, wenn das Rohr im Verhältnis zur Klaue gedreht wird.

2. Klaue gemäß Anspruch 1, wobei die Rollen (86, 88, 90) jeweils ein Paar Scheiben umfassen, die so konfiguriert sind, dass sie in Eingriff mit dem Umfang eines Rohres kommen und auf diesem auftreffen.

3. Werkzeug (82) zum Rohrschneiden und Rohranfasen, umfassend einen oder mehrere Schneidabschnitte (99) zum Trennen des Rohres in zwei Abschnitte; einen oder mehrere Anfasabschnitte (100) zum Anfasen der Kanten dieser Rohrabschnitte; wobei die Schneid- und Anfasabschnitte (99, 100) so konfiguriert sind, dass sie angetrieben sind; **dadurch gekennzeichnet, dass** das Werkzeug eine Klaue gemäß Anspruch 1 enthält.

4. Werkzeug gemäß Anspruch 3, des Weiteren umfassend ein Gehäuse (87) zur Aufnahme eines fremdkraftbetriebenen Rotationswerkzeugs; wobei das Gehäuse schwenkbar auf dem zweiten Abschnitt (84) montiert ist; wodurch die Schneid- und Anfasabschnitte zu dem Rohr hin und von diesem weg verlagert werden können.

5. Werkzeug gemäß einem der vorherigen Ansprüche, wobei die Rollen (86, 88, 90) jeweils ein Paar Scheiben umfassen, die so konfiguriert sind, dass sie in Eingriff mit dem Umfang eines Rohres kommen und auf diesem auftreffen.

6. Werkzeug gemäß einem der vorherigen Ansprüche, wobei ein oder mehrere Schneidabschnitte integriert mit dem einen oder den mehreren Anfasabschnitten ausgeführt ist bzw. sind.

7. Werkzeug gemäß Anspruch 6, wobei die Schneid- und Anfasabschnitte eine oder mehrere Klingen mit einem ersten Kantenabschnitt umfassen, dessen Winkel das Schneiden ermöglicht, und mit einen zweiten Kantenabschnitt, dessen Winkel das Anfasen ermöglicht.

8. Werkzeug gemäß einem der vorherigen Ansprüche, des Weiteren umfassend einen Zapfen, der von dem Werkzeug absteht und der dem Eingriff in ein fremdkraftbetriebenes Rotationswerkzeug dient.

9. Werkzeug gemäß einem der vorherigen Abschnitte, wobei das Werkzeug zum Rohrschneiden und Rohranfasen so geformt und konfiguriert ist, dass es per Hand gehalten und getragen werden kann; wobei das Werkzeug einen Handgriff zum Tragen des Werkzeugs während der Verwendung des Werkzeugs enthält.

## Revendications

1. Une mâchoire destinée à être utilisée avec un outil pour couper et pour biseauter un tuyau, intégrant un moyen pour recevoir et assujettir un outil électrique ; dans laquelle ladite mâchoire est calibrée et profilée pour être assujettie autour d'un tuyau ; ladite mâchoire intégrant une première portion (83) qui est substantiellement en forme de C et une deuxième portion (84) ; **caractérisée en ce que** ladite première portion (83) est montée de façon à pouvoir pivoter sur ladite deuxième portion (84) ; ladite première portion intégrant un rouleau (90) à son extrémité distale qui fait saillie à angle droit par rapport à la surface de ladite première portion ; ladite deuxième portion intégrant deux rouleaux (86, 88) qui font saillie à angle droit par rapport à la surface de ladite deuxième portion ; lesdits rouleaux étant prévus respectivement à des positions distale et proximale de ladite deuxième portion ; ladite première portion pouvant pivoter relativement à ladite deuxième portion entre une première position et une deuxième position ; grâce à quoi dans ladite première position la mâchoire est suffisamment ouverte pour permettre à l'outil d'être situé autour d'un tuyau par rapport à son côté et dans une deuxième position où les portions de mâchoire sont rapprochées tandis que leurs extrémités distales demeurent séparées de sorte que dans ladite deuxième position lesdits rouleaux (86, 88, 90) se mettent en prise avec ledit tuyau pour assujettir l'outil audit tuyau ; dans ladite deuxième position lesdits rouleaux formant un effet d'attache sur ladite circonférence de tuyau et servent de guide quand le tuyau entre en rotation relativement à la mâchoire.

2. Une mâchoire selon la revendication 1, dans laquelle lesdits rouleaux (86, 88, 90) intègrent chacun une paire de disques configurés pour se mettre en prise et tourner contre la circonférence d'un tuyau.

3. Un outil pour couper et pour biseauter un tuyau (82) comportant une ou plusieurs portions pour couper (99) destinées à trancher le tuyau en deux portions ; une ou plusieurs portions pour biseauter (100) destinées à biseauter les bords desdites portions de tuyau ; dans lequel les portions pour couper et pour biseauter (99, 100) sont configurées pour être entraînées ; **caractérisé en ce que** ledit outil intègre une mâchoire selon la revendication 1.

4. Un outil selon la revendication 3, comportant de plus un logement (87) pour recevoir un outil électrique rotatif ; ledit logement étant monté de façon à pouvoir pivoter sur ladite deuxième portion (84) ; grâce à quoi les portions pour couper et pour biseauter peuvent être déplacées vers et depuis ledit tuyau.

5. Une mâchoire selon n'importe laquelle des revendications précédentes, dans laquelle lesdits rouleaux (86, 88, 90) intègrent chacun une paire de disques configurés pour se mettre en prise et tourner contre la circonférence d'un tuyau.

6. Un outil selon n'importe laquelle des revendications précédentes, dans lequel une ou plusieurs portions pour couper fait ou font partie intégrante de la ou des portions pour biseauter.

7. Un outil selon la revendication 6, dans lequel les portions pour couper et pour biseauter intègrent une ou plusieurs lames avec une première portion de bord à un angle pour couper et une deuxième portion de bord à un angle pour biseauter.

8. Un outil selon n'importe laquelle des revendications précédentes, comportant de plus un ergot faisant saillie à partir dudit outil pour une mise en prise avec un outil électrique rotatif.

9. Un outil selon n'importe laquelle des revendications précédentes, dans lequel ledit outil pour couper et pour biseauter un tuyau est profilé et configuré pour être tenu et porté à la main ; l'outil intégrant une poignée destinée à porter l'outil tout en utilisant l'outil.
